# EUROPEAN PATENT APPLICATION

(11) **EP 0 579 920 A2**
(43) Date of publication of application: **26.01.1994**
(21) Application number: 93107993.3
(22) Date of filing: 17.05.1993
(51) Int. Cl.: A01K 1/06

(54) **Device for immobilizing large animals, especially cattle, under freely stabled conditions**

(30) Priority: 22.07.1992 IT BG920032
(71) Applicant: Amigoni, Carlo, I-24040 Misano di Gera d'Adda (Bergamo) (IT)
(72) Inventor: Amigoni, Carlo, I-24040 Misano di Gera d'Adda (Bergamo) (IT)
(74) Representative: Luksch, Giorgio, Dr.-Ing.

(57) **Abstract**

A device for immobilizing large animals, particularly cattle, under freely stabled conditions, consists of a swinging upright (4,11) positioned symmetrically between two fixed uprights (2A) defining lateral spaces and providing pivotal support (3) for said swinging upright, which has its free end engagable with a base mechanism (7,12-11A) able to retain it by a latch or other equivalent means following the raising of said mechanism, said mechanism being raised preferably by being rotated angularly about a transverse horizontal axis.

## Description

This invention relates to the field of devices used in stables for immobilizing large animals, generally cattle. As is well known, in modern stables the animals are raised in a manner which allows them a certain freedom of movement. This is particularly so in the case of cattle. There are however situations in which such animals must be immobilized, for example for periodic veterinary examinations or when veterinary treatment is required. To make this immobilization possible, the animals are provided with their food or forage via special barriers, through which the animal has to pass his head in order to reach the food. In this manner the animal becomes used to eating via such barriers, which are nearly always passive but which, when the farmer considers it necessary, can be activated to immobilize the animal's head by trapping it.

The currently used trapping mechanisms consist of bars which are arranged obliquely to define gaps through which the animal's head can pass only at the top. In this manner, to reach the food present in a lower position, the head has to be lowered so that it rests on the lower part of the oblique bar, which then assumes a new vertical position in which it is locked by the action of latch mechanisms or the like.

In this manner the upper space through which the animal's head could pass is eliminated and instead a space is created in which only the narrowest part of its neck can slide vertically. The result is that the animal has its head projecting beyond the barrier but cannot pull it back, and is hence immobilized. The structure of this usual type of mechanism has drawbacks which are also common to other existing devices. These drawbacks derive from the fact that even if the trap has not been activated it is possible for the animal to remain trapped if, because of weakness (senility, illness, incoherent instinctive panic behaviour), it falls down without being able to rise again. Under these conditions its neck becomes wedged within the narrow lower space in which only the neck can move. This situation remains for a prolonged time and involves instinctive impacts created by the desperate movements of the animal, leading to the said unfortunate event which, in traditional rearing, represents a remarkably frequent incident.

An object of the present invention is to provide a device which enables the head of large farm animals to be trapped without putting them in danger if they fall.

A further object is to provide a device which is of simple and economical construction.

A further object is to provide a device of high reliability.

These and further objects are attained, as will be apparent on reading the following description, by a device for immobilizing large animals, particularly cattle under freely stabled conditions, consisting of a swinging upright positioned symmetrically between two fixed uprights defining lateral spaces and providing pivotal support for said swinging upright, which has its free end engagable with a base mechanism able to retain it by a latch or other equivalent means following the raising of said mechanism, said mechanism being raised preferably by being rotated angularly about a transverse horizontal axis.

The invention is illustrated by way of non-limiting example on the accompanying drawing, in which:
Figures 1 and 2 are perpendicular views of a device with a base latch of rotatable wall type;
Figure 3 is a sectional side view of a device with a latch of falling engagement type.

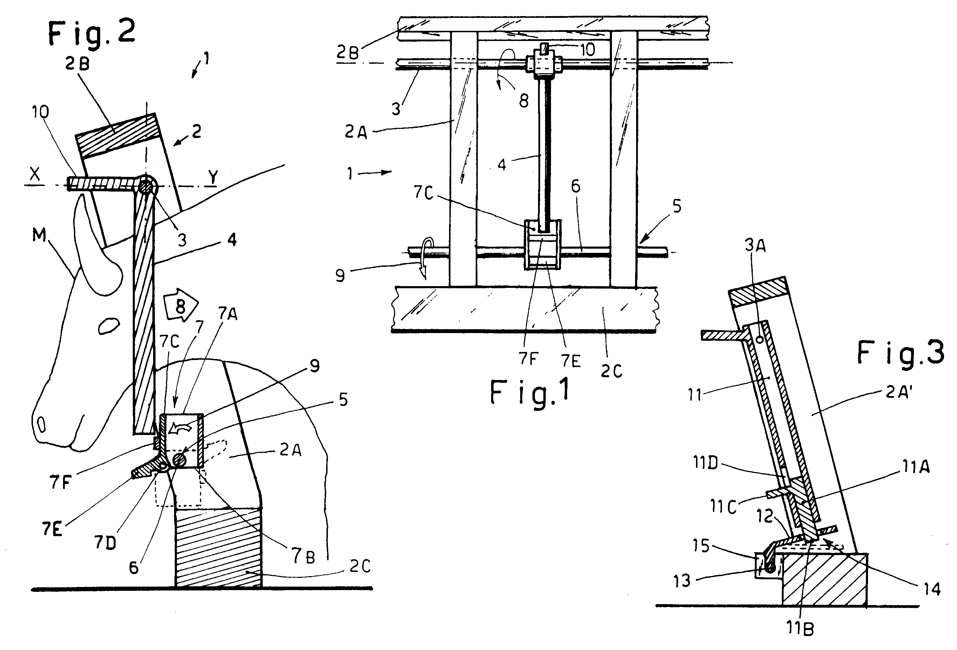

With reference to said Figures 1 and 2, a barrier 1 separates a region Y in which the animals M (typically cattle) usually reside, from a region X containing the hay or the like. This barrier consists of fixed structures 2 comprising uprights 2A, cross-members 2B and a base wall 2C. Between the uprights 2A there is a horizontal fixed tube 3 acting as a pivot for a swinging bar 4.

In a lower position in said uprights there are holes 5 for supporting a shaft 6 on which a special box 7 is fixed in a central position so as to coincide with the free end of the swinging bar 4. This box is open at its top 7A and at its bottom 7B. At its front it is provided with a wall 7C movable about a hinge 7D located in a bottom region. The movable wall 7C is provided in an eccentric perpendicular position with a weight 7E which maintains it bearing against a stop element 7F.

The swinging bar 4 is arranged freely swingable in front of the box 7. When the animal withdraws its head after eating, it drags the swinging bar 4 rearwards in a direction 8 so that it moves the movable wall 7C by making it rotate about its hinge 7D and lower its edge. In this manner the end of the swinging bar is able to pass beyond the edge of the movable wall 7C and remain trapped within the box 7, because the weight 7E has already returned the movable wall 7C to a position stably resting against the stop element 7E. On the drawing this element is indicated as a strip located in a lower position in order not to hinder the rearward movement of the end of the bar.

Once inside the box 7 the swinging bar 4 is locked, preventing the animal withdrawing its head. The animal is prevented from moving forwards by its shoulders, which halt against the now fixed central bar 4 and one of the two lateral fixed uprights 2A.

To release the animal's head it is sufficient to rotate the box 7 forwards in the direction 9. This is done by rotating the shaft 6 in this direction until no further contact is possible between the box 7 and the end of the swinging bar 4, and in the limit by a completely overturning rotation, as indicated by dashed lines, by which maximum spacing is achieved.

From the aforegoing it is apparent that the tubular shaft 6 must be able to be locked in the position in which the box is engaged (Figure 2), to prevent any forward thrust exerted on the swinging bar 4 by the animal being able to rotate the box 7 forwards. This locking can be achieved in various known ways, for example by diametric pins which rotationally lock the shaft 6 to its support structure 2A.

When the swinging bar 4 is free, its forward movement is limited by the engagement of a stem 10 against the cross-member 2B.

Figure 3 shows a different embodiment of the locking latch.

Whereas the version of Figures 1 and 2 comprises a swinging bar of fixed length cooperating with a movable wall 7C, the version of Figure 3 comprises a tubular bar 11 swinging about a pin 3A in a manner similar to the bar 4, however the end of the bar 11 is provided with a slider 11A, of which a part 11B projects from this end by the action of its own weight. The length of this projecting part is defined by usual stops. For example a radial handgrip 11C rigid with the moving slider 11A can project from a slot 11D in the tubular swinging bar, within which the moving slider 11A can slide freely. The projecting part 11B cooperates with an inclined plate 12 hinged on a shaft 13 in a position such as to enable it to move downwards or upwards. The inclined plate 12 has a hole 14 for housing the projecting part 11B as shown on the drawing. The projecting part 11B of the moving slider falls into said hole 14 after it has risen along the inclined plate 12 and hence undergone an upward movement within the tubular swinging bar 11.

By its insertion into the hole 14, and its consequent transverse engagement, the projecting part 11B prevents the tubular bar from swinging by locking it in an oblique position, so preventing the animal from withdrawing its head.

To release the animal from this trap, it is sufficient to lower the inclined plate 12 by rotating it about the shaft 13 until the projecting part 11B becomes disengaged when the plate 12 reaches a horizontal position, indicated on the drawing by dashed lines.

The inclined plate 12 therefore has two positions, namely raised for engaging the projecting moving part 11B of the tubular swinging bar 11, and lowered to allow free swinging of the bar 11.

Said inclined plate 12 is rigid with the horizontal hinge shaft 13, which is rotatable on supports 15. The shaft 13 is very long so as to be able to rigidly support a number of inclined plates 12. By this means, it is necessary merely to rotate the shaft 13 in order to operationally position a large number of inclined plates and hence trap a large number of animals as they withdraw their head. To release determined animals it is sufficient to disengage the specific latch by pulling up the radial handgrip 11C on the moving slider 11. The shaft 13 is locked in the required angular position by known methods, for example by inserting a diametric pin (as also stated for the versions of Figures 1 and 2).

The device can be constructed of any material such as wood, iron, concrete or mixed materials.

## Claims

1. A device for immobilizing large animals (M), particularly cattle, under freely stabled conditions, characterised by consisting of a swinging upright (4, 11) positioned symmetrically between two fixed uprights (2A) defining lateral spaces and providing pivotal support (3) for said swinging upright, which has its free end engagable with a base mechanism (7, 12-11A) able to retain it by a latch or other equivalent means following the raising of said mechanism.

2. A device as claimed in the preceding claim, characterised by a base mechanism consisting of a box (7) positionable in a raised engagement position or in a lowered release position by rotating its shaft (6) on fixed supports (5), relative to which it can be angularly positioned, said box being provided with a movable wall (7C) hinged (7D) horizontally at its base (7B) such that a weight (7E) positioned eccentrically thereon is able to maintain it in contact with a stop element (7F) while at the same time is able to allow it to move forwards to lower its front edge in order to enable the lower end of a swinging bar (4) to penetrate into said box and to prevent its withdrawal (8).

3. A device as claimed in the preceding claims, characterised by a base mechanism consisting of an inclined plate (12) pivoted (13) so that its level can be raised to enable a hole (14) provided in it to house a projecting part (11B) of a moving slider (11A) urged downwards by its own weight and so lock a tubular swinging bar (11), and its level be lowered to allow release of said projecting part of the swinging bar, the two different operating levels being achieved by rotating a hinge shaft (13) which is rotatable in supports (15).

4. A device as claimed in claim 3, characterised by a radial handgrip (11C) provided on the moving slider (11A) which slides within the tubular swinging bar (11), and projecting through a slot (11D) defining its extent of linear movement, it hence being usable for independently releasing each individual tubular swinging bar (11) if a plurality of inclined plates connected to the hinge shaft (13) are in their raised engagement position for locking further tubular swinging bars (11).
